# EUROPÄISCHE PATENTANMELDUNG

(11) **EP 3 479 935 A1**
(43) Veröffentlichungstag der Anmeldung: **08.05.2019**
(21) Anmeldenummer: 18202113.9
(22) Anmeldetag: 29.12.2016
(51) Int. Cl.: B22F 3/105, B22F 5/10, F17C 1/14, F15B 1/10, F17C 1/16, B33Y 80/00

(54) **VERFAHREN ZUM HERSTELLEN VON DRUCKBEHÄLTERN**

(30) Priorität: 31.12.2015 DE 102015017026
(62) Teilanmeldung aus: 16826007.3
(71) Anmelder: Hydac Technology GmbH, 66280 Sulzbach/Saar (DE)
(72) Erfinder: Baltes, Herbert, 66679 Losheim (DE); Kloft, Peter, 56235 Ransbach-Baumbach (DE)
(74) Vertreter: Bartels und Partner, Patentanwälte

(57) **Zusammenfassung**

1. Verfahren zum Herstellen von Druckbehältern.
2. Ein Verfahren zum Herstellen von Druckbehältern, einschließlich Druckspeichern, wie Hydrospeichern und deren Teile (24), ist dadurch gekennzeichnet, dass diese zumindest teilweise mittels eines 3D-Druckverfahrens hergestellt werden.

## Beschreibung

Die Erfindung betrifft ein Verfahren zum Herstellen von Druckbehältern, einschließlich Druckspeichern, wie Hydrospeichern und deren Teile.

Gemäß allgemeinem Verständnis sind Druckbehälter geschlossene Behälter, deren Druck im Inneren über dem Umgebungsdruck liegt. Zu den Druckbehältern zählen regelmäßig Lagerbehälter für Gase sowie Druckluftbehälter und Silos mit Druckluftbeaufschlagung sowie Druckspeicherbehälter, wie Hydraulikspeicher, Membranausdehnungsbehälter, Windkessel und dergleichen mehr. Nach dem europäischen Recht des freien Warenverkehrs unterscheidet man dabei zwischen den einfachen Druckbehältern nach der Richtlinie 2009/105/EG und den sogenannten Druckgeräten nach der Druckgeräterichtlinie 97/23/EG.

Hydraulikspeicher, die fachsprachlich auch mit Hydrospeicher bezeichnet werden, dienen grundsätzlich dazu, Druckenergie zu speichern. Bei den gewichts- und federbelasteten, mechanischen Hydrospeichern erfolgt dies durch eine Veränderung von potentieller Energie, wohingegen die gasbelasteten Speicher die innere Energie eines Arbeitsgases verändern. Je nach Ausgestaltung ihres Trennelementes, mit dem innerhalb des Speichergehäuses sich verschiedene Fluide voneinander separieren lassen, unterscheidet man zwischen Membranspeicher, Kolbenspeicher, Blasenspeicher und Balgspeicher. Grundsätzlich beruht die Wirkungsweise dieser Speicher darauf, dass die Kompressibilität eines Gases zur Flüssigkeitsspeicherung ausgenutzt wird. Dabei dient regelmäßig Stickstoff als Energiemedium. Verfügt der Hydrospeicher über kein Trennelement, handelt es sich regelmäßig um eine bekannte Windkesselkonstruktion.

Die vorstehend bezeichneten Druckbehälter und ihre Trennelemente lassen sich vielfältigst herstellen. Neben einer spanabhebenden Formgebung für das Speichergehäuse lässt sich dieses auch gießtechnisch erhalten. Zusehends kommen auch Druckbehälter zum Einsatz, die in sogenannter Composite-Bauweise hergestellt sind, um dergestalt bei geringen Materialeintragskosten gleichzeitig ein niedriges Baugewicht nebst hoher Strukturfestigkeit für den Speicher zu erreichen. So offenbart die DE 10 2014 008 649 A1 ein Verfahren zum Herstellen eines solchen Druckbehälters, vorzugsweise in der Art eines Blasenspeichers, bei dem zunächst eine Tragstruktur, insbesondere in Form eines Liners bereitgestellt wird, auf die ein Fasermaterial unter Bildung einer Grundstruktur aufgebracht wird, die wiederum in eine beheizbare Formeinrichtung eingebracht, das Einbringen einer Matrix zwischen der Formeinrichtung und der Grundstruktur ermöglicht, die in das Fasermaterial zumindest teilweise eindringt und entsprechend ausgehärtet nach Entformen das Speichergehäuse eines Blasenspeichers ergibt.

Dieses an sich sehr vorteilhafte Verfahren, das zu Speichergehäusen mit hoher Druckfestigkeit bei besonders geringem Baugewicht führt, ist insoweit nachteilig, als eben für jeden Speichertyp eine eigenständige Formeinrichtung zu schaffen ist, was in diesem Umfang die Herstellkosten deutlich erhöht. Auch benötigt das Aushärten der Matrix in der beheizbaren Form neben dem Energieaufwand für die Formheizung auch Herstellzeit, trotz der relativ kurzen Reaktionszeiten eines reaktiven Harzsystemes für die Matrix. Ferner ist der händische Aufwand für die Handhabung der Formeinrichtung nicht zu unterschätzen.

Ausgehend von diesem Stand der Technik liegt daher der Erfindung die Aufgabe zugrunde, Speichergehäuse mit hoher Druckfestigkeit herzustellen bei vermindertem händischen Aufwand und bei reduzierten Formgebungskosten. Eine dahingehende Aufgabe löst ein Verfahren mit den Merkmalen des Patentanspruchs 1 in seiner Gesamtheit.

Dadurch dass gemäß dem kennzeichnenden Teil des Patentanspruches 1 in erfindungsgemäßer Weise die Druckbehälter und gegebenenfalls deren Teile zumindest teilweise mittels eines 3D-Druckverfahrens hergestellt werden, kann auf eine Formeinrichtung, wie ein zu beheizendes Formwerkzeug, vollständig verzichtet werden. Vielmehr lässt sich ein Speichergehäuse eines Druckbehälters oder Teile dahingehender Druckbehälter, wie Trennelemente, formwerkzeugfrei herstellen, was auch den händischen Aufwand bei der Herstellung deutlich reduziert. Der technische Begriff Druckbehälter soll weit gefasst verstanden werden und schließt beispielsweise Linerkonstruktionen mit ein, die anschließend bevorzugt mit Fasergelegen (Composits) verstärkt werden.

Durch das erfindungsgemäße 3D-Druckverfahren lassen sich nahezu alle Formen von Druckbehältern und Druckspeichern realisieren und zwar in frei formender Weise, so dass eine Vielzahl von Gestaltungsmöglichkeiten realisierbar sind, wobei man dergestalt relativ frei ein Speichergehäuse auch an spezielle Einbausituationen vor Ort anpassen kann, so dass man nicht immer auf symmetrische Speichergehäuse von Druckbehältern zurückgreifen muss. Insbesondere im Rahmen der Realisierung von Membranspeichern lassen sich dergestalt eine Vielzahl neuer Gestaltungsformen finden, die sich an Einbauräume vor Ort anpassen lassen. Vor allem kann man mit nur einer 3D-Druck-Herstelleinrichtung eine Vielzahl von verschiedenen Druckbehältern realisieren, die sich auch von der Speichergröße her unterscheiden können. Man kann also mit nur einer Herstelleinrichtung eine Vielzahl von Speichern drucken, was so keine Entsprechung im Stand der Technik hat. Dergestalt lassen sich mittels 3D-Druckverfahren mit geringem Herstellaufwand bei Einhalten relativ kurzer Herstellzeiten druckstabile Speichereinrichtungen mit jedweder Gestalt schaffen.

Neben dem eigentlichen Speichergehäuse lassen sich mittels des 3D-Druckverfahrens auch weitere Komponenten eines Druckbehälters herstellen, insbesondere in Form von Trennelementen, wie Speicherblasen, Trennmembranen oder Speicherkolben. Ferner können die Anschlussstellen an den Druckbehältergehäusen gleich mitgestaltet werden oder als separate Einbauteile konzipiert werden. Besonders bevorzugt ist vorgesehen, einen Teil des Druckbehältergehäuses mittels des 3D-Druckverfahrens herzusteilen, dann das Trennelement einzubringen und anschließend das Speichergehäuse mittels 3D-Druck fertig zu drucken.

Da 3D-Herstelldruckmaschinen immer kostengünstiger werden und wenig Platz beanspruchen sowie bei entsprechender Softwareausstattung auch einem Laien ermöglichen, Druckerzeugnisse herzustellen, wäre es denkbar, die Behältererzeugung an den Herstellort des Kunden zu verlagern, der solche Druckbehälter, wie Druckspeicher, in seiner Fertigung benötigt. Dergestalt ließen sich dann die Druckbehälter "just in time" in die Hauptfertigung beim Kunden mit einschleusen, der solche Speicherprodukte für seine Produkterstellung benötigt.

In Abänderung des vorstehend beschriebenen Herstellverfahrens besteht aber auch die Möglichkeit, nur Teile des jeweiligen Druckbehälters mittels eines 3D-Druckverfahrens herzustellen und das derart hergestellte Produkt mit konventionell hergestellten Druckbehälterteilen zu verbinden. So ließe sich beispielsweise ein schalenartiges Gehäuseteil eines Membranspeichers mittels eines 3D-Druckverfahrens erhalten und das weitere schalenartige Gehäuseteil, das für die Komplettierung des Speichergehäuses als Ganzes notwendig ist, könnte über ein konventionelles Herstellverfahren, beispielsweise in spanender Weise oder mittels eines Gießverfahrens erhalten werden. Die Verbindung der beiden Gehäuseteile miteinander kann dann über ein konventionelles Schweißverfahren erfolgen oder unter Einsatz spezieller, insbesondere thermisch stabiler Klebstoffe, die auf dem Markt heute aber zur Verfügung stehen.

Da mittels eines 3D-Druckverfahrens sich nicht nur Kunststoffe verarbeiten lassen, sondern auch durchaus Metallwerkstoffe, können beide Materialien für die Erstellung des Druckbehälters Verwendung finden, so dass nochmals in weitergezogenem Rahmen sich Speicherrealisierungen nach Kundenvorgaben verwirklichen lassen.

Weitere vorteilhafte Ausführungsformen des erfindungsgemäßen Verfahrens sind Gegenstand der weiteren Unteransprüche.

Im Folgenden wird das erfindungsgemäße Verfahren zum Herstellen von Druckbehältern anhand mehrerer Ausführungsbeispiele nach der Zeichnung näher erläutert. Dabei zeigen in prinzipieller und nicht maßstäblicher Darstellung die
- Fig. 1 und 2: einmal in Schnittdarstellung, einmal in Draufsicht ein Ausführungsbeispiel eines Druckbehälters in der Art eines Windkessels oder Helmholtz-Resonators;
- Fig. 3, 4 und 5: jeweils in einer Schnittdarstellung einzelne Herstellschritte betreffend einen Membranspeicher als Unterfall eines Druckbehälters;
- Fig. 6 und 7: in der Art einer Längsschnittdarstellung verschiedene Herstellstadien für einen Kolbenspeicher als weiteren Unterfall eines Druckbehälters; und
- Fig. 8: in Längsschnittdarstellung das Speichergehäuse eines weiteren Druckbehälters in Form eines Blasenspeichers.

Als 3D-Druckverfahren zum Herstellen von Druckbehältern nebst deren Teile eignen sich grundsätzlich Sinter- und Pulverdruckverfahren, die Stereolithografie sowie das Drucken mit flüssigen Komponenten. Alle vorstehend 3D-Druckverfahren finden auch häufig im Rapid Prototyping Verwendung.

Sofern Objekte, wie Speichergehäuse, ausschließlich aus Metall aufgebaut werden sollen, hat sich das sogenannte Elektronenstrahlschmelzen als 3D-Druckverfahren geeignet erwiesen. Bei dem Elektronenstrahlschmelzen (Electron Beam Melting) wird Metallpulver schichtweise aufgeschmolzen und als Gehäusewand abgetragen. Ebenso geeignet ist das selektive Laserschmelzen, bei dem ein Metallpulver lediglich lokal aufgeschmolzen wird. Gleichfalls möglich ist der Einsatz des selektiven Lasersintems, bei dem ein Metallpulver mit einem Laser kurzzeitig derart erhitzt wird, dass dieses schmilzt, wobei es sich anschließend wieder unter Bildung des metallischen Speichergehäuses verfestigt. Alle vorstehend genannten 3D-Druckverfahren gehören der Gattung der Sinter- und Pulverdruckverfahren an.

Soweit der Druckbehälter unter Einsatz von Kunststoffmaterialien gedruckt werden soll, bietet sich das Drucken mit flüssigen Kunststoffmaterialien an. Hier hat sich insbesondere das Multi-Jet Modeling bewährt, das vom grundsätzlichen Aufbau her stark an einen herkömmlichen Tintenstrahldruck erinnert. Bei dem dahingehenden 3D-Druckverfahren wird flüssiges Kunststoffmaterial aus einer Düse stammend aufgetragen, die sich bevorzugt in mehrere Richtungen bewegen kann, und sobald das Material formend aus der Düse austritt, wird es unter einer Energiequelle entsprechend gehärtet, beispielsweise in Form von UV-Licht.

Mit dem Multi-Jet Modeling werden Kunststoffmaterialien in Tröpfchenform im Umfang weniger Piktoliter abgegeben, wobei das Sprühen der Tröpfchen vorzugsweise rechnergesteuert mit einer hohen Taktfrequenz von beispielsweise 2 kHz erfolgt. Als besonders geeignete Kunststoffmaterialien haben sich verflüssigte Acrylate erwiesen, deren Viskosität durch Zusatz eines Reaktiv-Verdünners in gewünschter Weise eingestellt werden kann. Vorzugsweise wird durch die Zugabe eines Photoinitiators die Härtbarkeit mittels der UV-Strahlung begünstigt. Bei einem Beispiel für einen Gehäusewerkstoff enthält das Kunststoffmaterial als Acrylatwerkstoff 90 % Ebecryl 4835, ein von der Firma UCB hergestelltes Prepolymer, 8 % HDDA (Firma UCB) als Reaktiv-Verdünner zur Viskositätseinstellung und 2 % Darocur 1173, hergestellt von der Firma Ciba-Geigy, als Photoinitiator.

Bei einem anderen Beispiel sind als Gehäusematerial Acrylatwerkstoffe 90 % Ebecryl 4835 sowie 4 % Ebecryl 230 der Firma UCB vorgesehen. Als Reaktiv-Verdünner sind 4 % HDDA der Firma UCB und als Photoinitiator 2 % Darocur 1173 der Firma Ciba-Geigy enthalten.

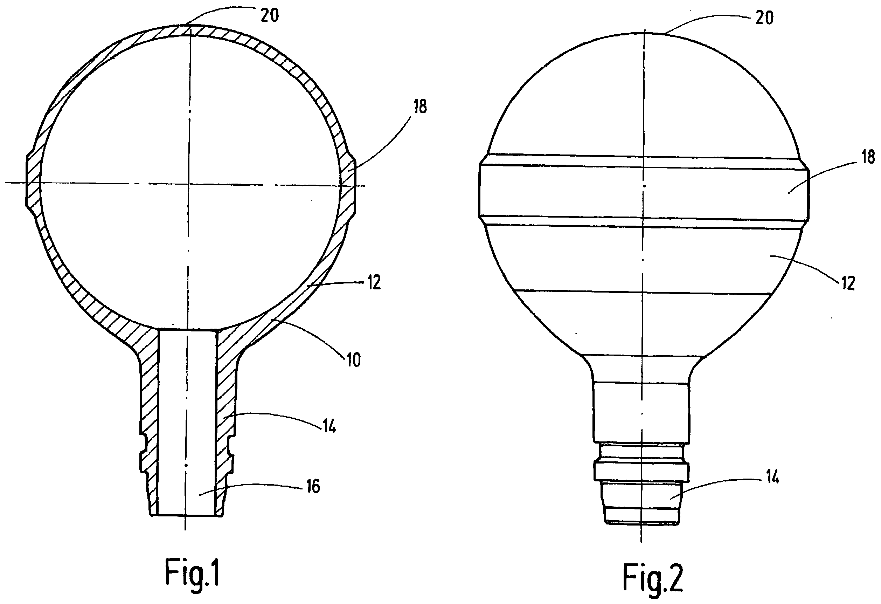

Mit den vorstehend näher bezeichneten Kunststoffmaterialien oder anderen geeigneten Kunststoffmaterialien lassen sich im 3D-Druckverfahren Speichergehäuse 10 aufbauen, wie es beispielhaft für einen Druckbehälter 12 in der Art eines Windkessels oder Helmholtz-Resonators zur Pulsationsdämpfung von Fluiden gemäß den Darstellungen in den Figuren 1 und 2 aufgezeigt ist. An das Speichergehäuse 10 ist am unteren Ende eine Fluid-Anschlussstelle 14 einstückig angebracht mit einer speziellen Anschlussgeometrie zwecks Anschließen des Druckbehälters 12 in üblicher Weise an einen Fluid-, insbesondere Gasversorgungskreislauf. Das Speichergehäuse 10 bildet im Wesentlichen einen kugelförmigen Querschnitt aus, in den die Fluid-Anschlussstelle 14 über einen zentralen Kanal 16 medienführend eintritt. Das Speichergehäuse 10 hat im Wesentlichen einen gleichbleibenden Wanddurchmesser, ist jedoch in der Mitte mit einer entsprechenden ringförmigen Verstärkung 18 im Äquatorbereich versehen. Dahingehende Druckbehälter 12 lassen sich auch mittels eines Metallpulvers drucken und sind dann durchaus bis 350 bar in dieser Ausgestaltung druckfest, bei regelmäßigen Einsatz- oder Arbeitstemperaturen von 40°C bis 150°C.

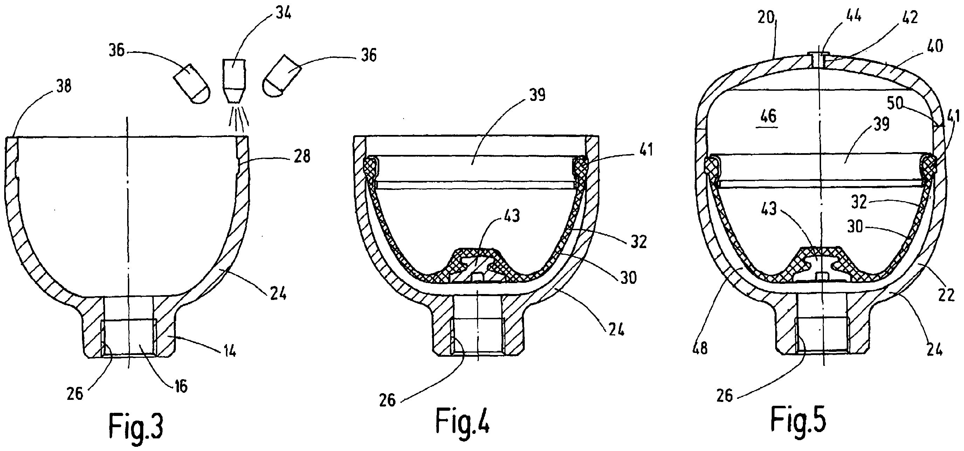

In Blickrichtung auf die Figuren 1 und 2 gesehen, beginnt der 3D-Druck-Materialaufbau entweder vom unteren Ende her, also beginnend am freien Ende der Fluid-Anschlussstelle 14 oder auf der oberen Abschlussseite 20 des Druckbehälters 12. Mit nur einer 3D-Druckherstelleinrichtung lässt sich ein solcher Druckbehälter 12 in allen Größen herstellen, auch mit veränderten Querschnittsformen (oval, mehreckig etc.) und verschiedensten Anschlussstellen (nicht dargestellt). Mit derselben Herstelleinrichtung lassen sich dann auch die anderen Speichergeometrien drucken gemäß den Darstellungen nach den Figuren 3ff. Des Weiteren kann der in den Figuren 1 und 2 dargestellte Druckbehälter 12, insbesondere wenn er aus Kunststoffmaterialien gedruckt worden ist, auch noch für Anwendungen im Hochdruckbereich mit zusätzlichen Verstärkungen versehen werden, beispielsweise könnte man auf dessen Außenseite, was nicht näher dargestellt ist, ein Stützlaminat aufbringen oder die Außenseite des gedruckten Druckbehälters 12 mit Umfassungsbändern, beispielsweise aus Karbonmaterialien, versehen.

Bei den nachfolgenden Ausführungsbeispielen werden dieselben Komponenten wie vorstehend wiedergegeben mit denselben Bezugsziffern versehen. Das in den Figuren 3 bis 5 gezeigte Ausführungsbeispiel betrifft einzelne Herstellschritte zum Herstellen eines Membranspeichers 22, wie er in der Fig. 5 in Längsschnittdarstellung wiedergegeben ist. Zunächst wird gemäß der Darstellung nach der Fig. 3 in einem ersten Arbeits- öder Herstellschritt das untere Gehäuseteil 24 im 3D-Druckverfahren hergestellt. Das dahingehende Gehäuseteil 24 ist in der Art einer Schale ausgebildet und weist an seiner Unterseite wiederum eine Fluid-Anschlussstelle 14 mit einem medienführenden Kanal 16 auf. In Richtung des Kanals 16 weisend ist am unteren Ende der Fluid-Anschlussstelle 14 in diese innenumfangsseitig ein Gewinde 26 nachträglich in spanender Weise eingebracht. Das dahingehende Gewinde 26 dient wiederum dazu, das Speichergehäuse 10 mit dem unteren Gehäuseteil 24 an einen nicht näher dargestellten Fluid-, insbesondere Hydraulikkreis anzuschließen. Im oberen Bereich des unteren Gehäuseteils 24 ist eine umlaufende Ringnut 28 eingebracht, die dem späteren Einbringen eines Trennelementes 30 in Form einer schalenförmigen Trennmembran 32 dient.

Die Herstellung des unteren Gehäuseteiles 24 im 3D-Druckverfahren erfolgt mittels einer Auftragdüse 34, die mit hoher Taktfrequenz, beispielsweise 2 kHz, das Kunststoffmaterial im Piktoliter-Bereich zwecks Herstellen des unteren Gehäuseteils 24 abgibt. In Blickrichtung auf die Fig. 3 gesehen, sind zur Vervollständigung der Multi-Jet-Modeling-Einrichtung zwei UV-Lampen 36 vorhanden, die das aufgespritzte Kunststoffmaterial entsprechend aushärten. Die Maschineneinheit bestehend aus Auftragdüse 34 und UV-Lampen 36 lässt sich mittels einer nicht näher dargestellten Einstelleinrichtung in allen drei Raumachsen frei bewegen. Im vorliegenden gezeigten Fall wird das Druckverfahren bei schichtweisem Auftrag mit der Fluid-Anschlussstelle 14 begonnen und endet wie dargestellt am oberen Rand 38 des unteren Gehäuseteiles 24.

Wie die Fig. 4 dann weiter zeigt, wird die Trennmembran 32 mit einem Befestigungsring 39 in das untere Gehäuseteil 24 eingebracht und eine am oberen Rand vorhandene Randverstärkung 41 der Trennmembran 32 greift in festlegender Weise in die Ringnut 28 des unteren Gehäuseteiles 24 ein. Wie die Darstellung nach den Figuren 4 und 5 weiter zeigt, ist am unteren Ende der Trennmembran 32 ein Ventilteller 43 eingebracht, der den Fluid- oder Medienkanal 16 in Richtung des Speichergehäuseinneren verschließen kann. Insoweit ist die Trennmembran 32 elastisch nachgiebig ausgebildet; ein konstruktiver Aufbau, der bei solchen Membranspeichern 22 üblich ist und sich bewährt hat. Der Befestigungsring 39 ist federelastisch nachgiebig ausgebildet und drückt mit seiner offenen Profil- oder Querschnittsform die Randverstärkung 41 in Richtung der Ring- oder Aufnahmenut 28 im Speichergehäuse 10.

Es ist vorstellbar, die Trennmembran 32 beispielsweise aus einem medienbeständigen Material, wie Polytetrafluorethylen, gleichfalls im 3D-Druckverfahren herzustellen, um diese dann wiederum mit dem Befestigungsring 39, der gegebenenfalls auch im 3D-Druckverfahren hergestellt ist, in dem unteren Gehäuseteil 24 festzulegen. In Weiterausgestaltung wäre es auch denkbar, unmittelbar im 3D-Druckverfahren die Trennmembran 32 direkt an den unteren Gehäuseteil 24 jedoch ohne Befestigungsring 39, anzuformen. Dergestalt ließe sich dann der gesamte Speicher in Form des Membranspeichers 22 mit nur einer Herstellmaschine im 3D-Druckverfahren erzeugen. Bei entsprechend präzise arbeitenden 3D-Druckverfahren besteht darüber hinaus die Möglichkeit, über das Druckverfahren selbst das Gewinde 26 an der Fluid-Anschlussstelle 14 zu generieren. Ein weiter geeignetes Material zum Herstellen eines Trennelementes, wie beispielsweise eine Trennmembran 32, ist thermoplastisches Polyurethan (TPU), das sich mit einem 3D-Druckverfahren verarbeiten lässt.

Ist der Zwischenherstellschritt nach der Fig. 4 erreicht, wird dann der Membranspeicher 22 durch das 3D-Druckverfahren vervollständigt, indem dann das obere Gehäuseteil 40 dem unteren Gehäuseteil 24 nachfolgend gedruckt wird. Auf der oberen Abschlussseite 20 des Speichergehäuses 10 wird dann eine Durchlassstelle 42 nachträglich mechanisch eingebracht oder im Druckverfahren freigelassen, die mit einem Stopfen 44, der gleichfalls gedruckt werden kann, verschlossen wird. Dergestalt lässt sich auf die Gasseite 46 des Speichers 22 ein Energiespeicher einbringen, beispielsweise in Form eines Arbeitsgases wie Stickstoffgas und dort bevorraten. Das Trennelement 30 in Form der Trennmembran 32 trennt dann die dahingehende Gasseite 46 von der Flüssigkeits-, insbesondere Hydraulikseite 48 des Speichers 22.

Es besteht aber auch die Möglichkeit, entweder das untere Gehäuseteil 24 oder das obere Gehäuseteil 40 in konventioneller Weise, beispielsweise mittels eines Gießverfahrens herzustellen und nur das jeweils andere Gehäuseteil 40 bzw. 24 im 3D-Druckverfahren aus Kunststoff- oder Metallwerkstoffen aufzubauen. Die Gehäuseteile 24 und 40 können, auch wenn sie im 3D-Druckverfahren hergestellt sind, separat erstellt werden und lassen sich dann beispielsweise an einer Trennstelle 50 entlang des oberen Randes 38 verlaufend mittels einer Schweiß- oder Klebstoffverbindung miteinander verbinden. Dergestalt lässt sich die Speicherkonstruktion in einem sehr weiten Bereich an praktische Gegebenheiten auch vor Ort anpassen.

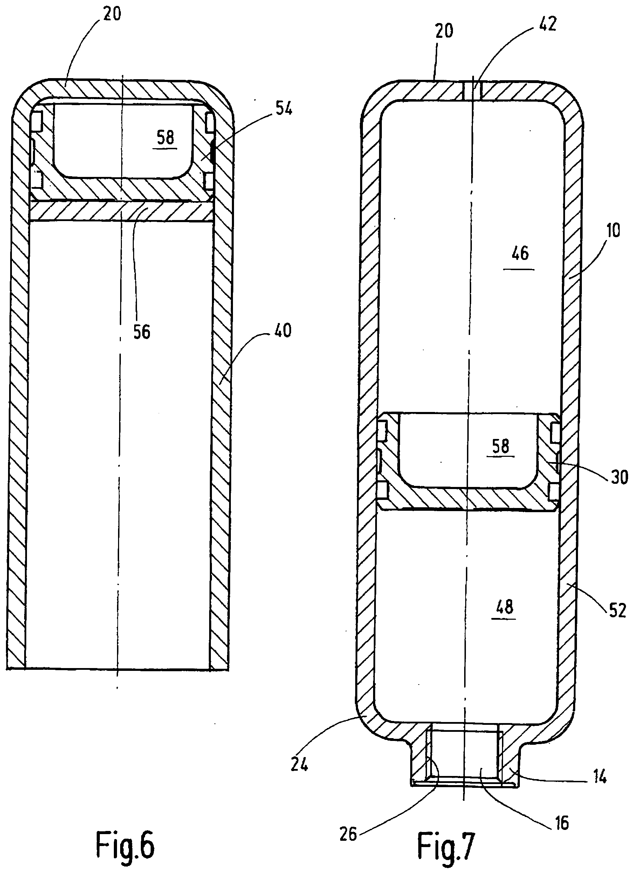

Die folgenden Figuren 6 und 7 zeigen nun die Ausbildung eines Kolbenspeichers 52 im 3D-Druckverfahren. Zunächst wird in einem ersten Herstellschritt gemäß der Darstellung nach der Fig. 6 das obere Gehäuseteil 40 gedruckt, beispielsweise mittels den bereits beschriebenen 3D-Druckverfahren. Das obere Gehäuseteil 40 ist auf seiner oberen Abschlussseite 20 geschlossen ausgebildet und weist im Wesentlichen dieselbe Wandstärke auf. In das obere Gehäuseteil 40 wird dann das Trennelement 30 diesmal in Form eines Trennkolbens 54 eingesetzt. Die üblichen Dicht- und Führungssysteme für den Trennkolben 54 sind der Einfachheit halber weggelassen. Wiederum kann der Trennkolben 54 gleichfalls in einem 3D-Druckverfahren hergestellt sein. So kann das Speichergehäuse 10 aus einem Metallwerkstoff und der Trennkolben 54 aus Gewichtsgründen heraus aus einem Kunststoffmaterial gedruckt sein.

Gemäß der Darstellung nach der Fig. 6 kann dann unterhalb des Trennkolbens 54 mittels eines plattenförmigen Abschlussteils 56 der freie Zugang zum Trennkolben 54 in hermetisch dichtender Weise verschlossen sein. Im dahingehenden Einsatzzustand des Abschlussteils 56 besteht dann die Möglichkeit einer Innenwandbearbeitung für das obere Gehäuseteil 40. Dergestalt lassen sich Unsauberkeiten beim 3D-Drucken mechanisch (spanend), thermisch oder chemisch beseitigen, ohne dass durch Verschmutzungspartikel, die nicht näher dargestellten Dicht- und Führungssysteme des Trennkolbens 54 in Mitleidenschaft gezogen werden. Auch die Lauffläche des Trennkolbens 54 lässt sich vor dem Einsetzen in das Speichergehäuse 10 oder das Gehäuseteil 40 mechanisch nachbearbeiten.

Da regelmäßig das Abschlussteil 56 in seiner Position im oberen Gehäuseteil 40 nach der Fig. 6 sich nur schwer beseitigen lässt, kann zunächst auch das Speichergehäuse 10 fertig gedruckt werden, d.h., das untere Gehäuseteil 24 mit Fluid-Anschlussstelle 14 nebst Kanal 16 und Gewinde 26 wird nachträglich durch 3D-Druck erstellt und schließt sich insoweit einstückig an die Gehäusewandstruktur des oberen Gehäuseteils 40 an. Da das stopfenartige Abschlussteil 56 dann die Bewegung des Trennkolbens 54 beeinträchtigen würde, wird das Abschlussteil 56 im geschlossenen Speichergehäuse 10 nach der Fig. 7 thermisch oder chemisch zerstört, und die Reste des Abschlussteiles 56 können über die Fluid-Anschlussstelle 14 von der Flüssigkeitsseite des Kolbenspeichers 52 nach außen abgeführt werden, bevor der Kolbenspeicher 52 wiederum für einen sinnfälligen Gebrauch an ein Hydrauliknetz oder dergleichen angeschlossen wird. Um das Volumen auf der Gasseite 46 des Kolbenspeichers 52 zu erhöhen, weist der Trennkolben 54 eine Ausnehmung 58 auf. Des Weiteren wird für das Einfüllen des Arbeitsgases auf der Gasseite 46 das Speichergehäuse 10 auf der oberen Abschlussseite 20 wiederum mit einer Durchlassstelle 42 in Form einer Bohrung versehen.

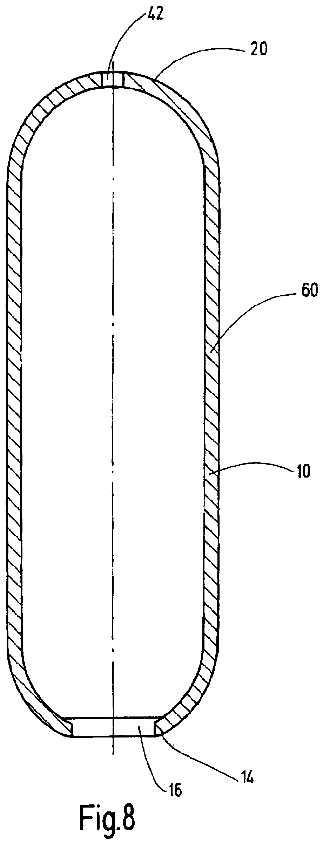

Bei der letzten Ausführungsform eines Druckbehälters 12 ist in der Fig. 8 das Speichergehäuse 10 eines Blasenspeichers 60 dargestellt, wobei das Speichergehäuse 10 hier wiederum als Ganzes im 3D-Druckverfahren hergestellt worden ist. Das Speichergehäuse 10 weist an seinem unteren Ende eine Fluid-Anschlussstelle 14 mit derart großem Kanalquerschnitt 16 auf, dass nachträglich in den derart geschaffenen Behälter eine nicht näher dargestellte Membran oder Speicherblase als Trennelement 30 eingesetzt werden kann. Auch hier sind wieder Varianten denkbar, bei denen die nicht näher dargestellte Speicherblase ein integrales und nicht austauschbares Element des Gesamt-Blasenspeichers 60 ist. Auf der oberen Abschlussseite 20 des Speichergehäuses ist wiederum eine Durchlassstelle 42 angeordnet, über die man die Gasseite der Speicherblase entsprechend befüllen kann.

Das Speichergehäuse 10 gemäß der Darstellung nach der Fig. 8 kann auch ein Liner sein, der zur Vervollständigung und Verstärkung mit einem Fasergelege (nicht dargestellt) umwickelt sein kann. Auch lässt sich als Trennelement (30) für einen nicht dargestellten Balgspeicher eine Balgmembran im 3D-Druck, auch aus Metall, herstellen.

## Patentansprüche

1. Verfahren zum Herstellen von Druckbehältern (12), einschließlich Druckspeichern, wie Hydrospeichern (22, 52, 60) und deren Teile (30), **dadurch gekennzeichnet, dass** diese zumindest teilweise mittels eines 3D-Druckverfahrens hergestellt werden.

2. Verfahren nach Anspruch 1, **dadurch gekennzeichnet, dass** die Gehäusewand mindestens eines Gehäuseteils (24, 40) des Druckbehälters (12) oder Druckspeichers (22, 52, 60) im 3D-Druck als Druckverfahren hergestellt wird.

3. Verfahren nach Anspruch 1 oder 2, **dadurch gekennzeichnet, dass** in zeitlicher Abfolge erst ein Gehäuseteil (24, 40) im 3D-Druck hergestellt wird und anschließend ein Trennelement (30) in das gedruckte Gehäuseteil (24, 40) eingebracht wird.

4. Verfahren nach einem der vorstehenden Ansprüche, **dadurch gekennzeichnet, dass** unter Bildung des Gesamtgehäuses (10) das Gehäuseteil (24, 40) mit dem Trennelement (30) mit einem konventionell hergestellten Gehäuseteil verbunden wird oder dass das Gesamtgehäuse (10) mittels 3D-Druck fertiggestellt wird.

5. Verfahren nach einem der vorstehenden Ansprüche, **dadurch gekennzeichnet, dass** bei der Erstellung der jeweiligen Gehäusewand (10) oder deren Teile (26) die Fluid-Anschlussstellen (16) durch 3D-Druck mit erstellt werden.

6. Verfahren nach einem der vorstehenden Ansprüche, **dadurch gekennzeichnet, dass** die Teile von Hydrospeichern in Form von Trennelementen, wie einer Membran (32), einem Kolben (54) oder einer Speicherblase gleichfalls in 3D-Druck hergestellt werden.

7. Verfahren nach einem der vorstehenden Ansprüche, **dadurch gekennzeichnet, dass** zumindest die Innenwandflächen eines Teiles der im 3D-Druck hergestellten Gehäuseteile (24, 40) mechanisch, thermisch oder chemisch nachbehandelt werden.

8. Verfahren nach einem der vorstehenden Ansprüche, **dadurch gekennzeichnet, dass** als Materialien für den 3D-Druck Kunststoffe und/oder Metalle verwendet werden.

9. Verfahren nach einem der vorstehenden Ansprüche, **dadurch gekennzeichnet, dass** für den Erhalt eines Membranspeichers (22) zuerst ein schalenförmiges Gehäuseteil (24) mittels 3D-Druck erstellt wird, danach als Trennelement (30) die Membran (32) mit einem Befestigungsring (39) eingesetzt wird und anschließend das schalenförmige Gehäuseteil (24) mit einem weiteren, vorzugsweise schalenförmigen Gehäuseteil (40) als Abschluss versehen wird.

10. Verfahren nach einem der vorstehenden Ansprüche, **dadurch gekennzeichnet, dass** für den Erhalt eines Kolbenspeichers (52) nach Einbringen des Kolbens (54) in das eine, mittels 3D-Druck hergestellte Gehäuseteil (40), dieses mittels eines stopfenartigen Abschlussteils (56) verschlossen wird zwecks Nachbearbeiten der Innenwandung dieses Gehäuseteils (40) und dass das eine Gehäuseteil (40) mit einem weiteren Gehäuseteil (24) als Abschluss des Speichergehäuses (10) versehen und das Abschlussteil (56) zerstört wird.
